# DEMANDE DE BREVET EUROPEEN

(11) **EP 1 925 464 A1**
(43) Date de publication de la demande: **28.05.2008**
(21) Numéro de dépôt: 07291398.1
(22) Date de dépôt: 26.11.2007
(51) Int. Cl.: B60B 33/00, B60B 33/04, B60B 19/00

(54) **Roue à propriétées amortissante**

(30) Priorité: 24.11.2006 FR 0610322
(71) Demandeur: Delsey, 93290 Tremblay (FR)
(72) Inventeur: Gerard, Grégoire, 69006 Lyon (FR); Roux, Serge, 75010 Paris (FR); Ferrari, François-Xavier, 93110 Rosny-sous-Bois (FR); Clerc, Aurélien, 90400 Danjoutin (FR); Francillout, Mathieu, 91300 Massy (FR); Ernecq, Kathryn, 75014 Paris (FR); Girardin, Yannick, 75015 Paris (FR)
(74) Mandataire: Kaspar, Jean-Georges

(57) **Abrégé**

Une roue pouvant absorber les vibrations de hautes fréquences et faibles amplitudes, ainsi que les vibrations de basses fréquences et fortes amplitudes ou les vibrations de moyennes fréquences et moyennes amplitudes, comporte une bande de roulement (1) en matériau tendre portée par une jante (2) creuse, déformable élastiquement, l'ensemble bande de roulement (1)-jante creuse (2) étant relié à son support en un point décentré par rapport au centre de rotation (0) dudit ensemble (1-2).

## Description

La présente invention concerne une roue dont la structure est telle qu'elle absorbe aussi bien les vibrations hautes fréquences, que basses et moyennes pour des déformations plus ou moins importantes.

Les recherches ayant conduit à l'invention ont été menées dans le cadre de roulettes pour bagages ; mais il est précisé que l'invention n'est pas limitée à cette application particulière ; la roue selon l'invention pouvant être employée dans de multiples applications telles par exemple que tables roulantes, meubles roulants, remorques, brouettes ou autres, cette liste n'étant nullement limitative.

On a proposé de multiples solutions pour absorber les chocs et vibrations transmis par des roues à la structure qu'elles supportent.

Dans le document US 2003 / 006 572, on décrit une roulette dont le support de l'axe est relié à son pivot par l'intermédiaire d'un bloc en caoutchouc.

Dans le document WO 01/39625, on décrit une roulette dont le support de l'axe est contretenu télescopiquement par un ressort.

Dans les documents WO 01/39625, US 4 397 062, US 5 873 145, US2003 / 006 572 et CN 2 673 771, on décrit une roulette portée par un support pivotant contretenu par un élément élastique, ressort hélicoïdal ou à lames.

Dans le document US 2004 / 0201 188, on décrit une roulette faite en élastomère ou en gomme.

Dans le brevet hollandais NL 1011099, on a décrit une roulette comportant une couronne métallique ondulée interposée entre la jante et la bande de roulement.

Aucun de ces dispositifs antérieurs ne donne réellement satisfaction ; de sorte qu'il s'est avéré nécessaire de rechercher de nouvelles solutions.

La présente invention concerne une roue constituée de façon à absorber les chocs et vibrations, comportant une bande de roulement portée par une jante creuse, l'ensemble bande de roulement-jante creuse étant relié à son support en un point décentré par rapport au centre de rotation dudit ensemble.

Selon d'autres caractéristiques alternatives de l'invention :
- cet ensemble bande de roulement-jante creuse est porté par l'intermédiaire de trois rouleaux
- deux rouleaux prennent appui sur la bande de roulement à l'extérieur de l'ensemble bande de roulement-jante creuse et le troisième rouleau prend appui à l'intérieur dudit ensemble sur la paroi interne de la jante.
- l'ensemble bande de roulement-jante est relié à un support monté à pivotement sur un bras.
- ledit support est monté sur le bras par l'intermédiaire d'un silent bloc.
- les centres des rouleaux forment avec le centre de rotation un triangle isocèle, le centre du rouleau étant sur la bissectrice de l'angle au sommet dudit triangle.
- la jante comporte de chaque côté, une gorge circulaire, ces gorges ayant une section trapézoïdale; deux rouleaux étant doubles, disposés de chaque côté de la jante et tronconiques de façon à pénétrer dans les deux gorges; et le troisième rouleau traversant la jante creuse et venant en appui contre sa paroi circulaire intérieure.
- le troisième rouleau est porté par un bras, monté à pivotement sur le support de façon à pouvoir suivre les déformations élastiques de la jante; l'articulation du bras comportant un rappel élastique.
- la bande de roulement ou pneu est solidaire de la jante creuse, cet ensemble pneu-jante étant porté par un support de façon à être décentré par l'intermédiaire de trois rouleaux placés à l'intérieur de la jante creuse.
- le support est en forme de T inversé, la bande horizontale du T portant, à ses extrémités, deux rouleaux supérieurs, le troisième rouleau étant porté par un bras articulé avec rappel élastique sur la branche.
- le support est monté à pivotement sur le châssis par l'intermédiaire d'un silent bloc.

L'invention peut également comporter une ou plusieurs des dispositions suivantes :
a/ La jante creuse est rigide et la bande de roulement tourne autour de cette jante, soit par roulement à billes, soit par glissement
b/ La jante creuse est déformable élastiquement, et la bande de roulement en est solidaire.

L'invention sera mieux comprise grâce à la description qui va suivre, donnée à titre d'exemple non limitatif en référence aux dessins annexés dans lesquels :
La figure 1 représente une vue schématique illustrant le principe d'un premier mode de réalisation
La figure 2 représente schématiquement une vue illustrant la mise en oeuvre du dispositif selon la figure 1;
La figure 3 représente schématiquement une vue d'une variante du dispositif de la figure 2 ;
La figure 4 représente schématiquement une vue de face d'un deuxième mode de réalisation de dispositif selon l'invention ;
La figure 5 représente schématiquement une vue en coupe du dispositif de la figure 4 ;
La figure 6 représente schématiquement une vue en perspective du dispositif des figures 4 et 5 ;
La figure 7 représente schématiquement une vue de face d'une variante préférentielle de réalisation du dispositif des figures 4 à 6 ;
La figure 8 représente schématiquement une vue en coupe d'un détail de la figure 7 ;
Les figures 9 et 10 représentent schématiquement deux vues illustrant une variante de réalisation du dispositif des figures 7 et 8 ;
Les figures 11 et 12 représentent schématiquement deux vues illustrant une autre variante de réalisation du dispositif des figures 7 et 8 ;
La figure 13 représente schématiquement une vue illustrant les quatre phases de fonctionnement du mode de réalisation des figures 7 et 8.

Le problème à résoudre est d'amortir la totalité de l'éventail des vibrations des basses fréquences aux hautes fréquences en passant par les moyennes fréquences.

Les hautes fréquences sont générées par les irrégularités du revêtement de la surface de roulage, mais dans ce cas l'amplitude est faible.

Les moyennes fréquences sont générées par des chocs répétitifs, de moyenne amplitude, provoqués par l'assemblage des éléments de revêtement tels que pavés, canelages, dallages.

Les basses fréquences sont générées par des chocs inhabituels et irréguliers, de grande amplitude, provoqués par des obstacles sur la surface de roulage tels que franchissement de trottoirs, escaliers, entrée dans des moyens de transports.

Les roulettes placées à la base des bagages rencontrent ces trois types de vibrations.

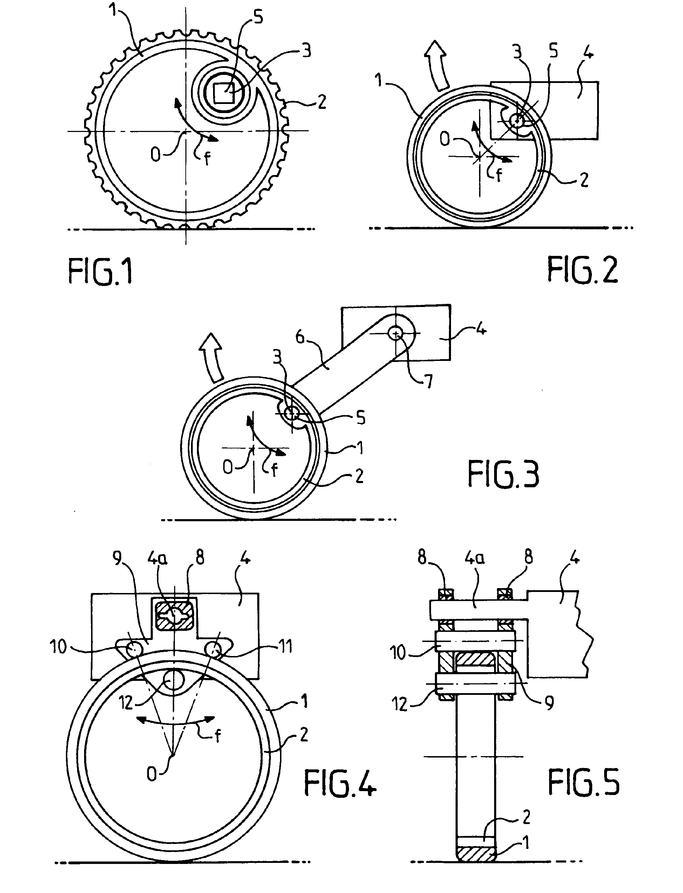

La figure 1 représente le principe d'un premier moyen permettant de résoudre le problème posé par ces vibrations.

Sur cette figure 1, on voit que la roulette comporte une bande de roulement 1 qui tourne par glissement sur une jante 2 qui est fixe, creuse et fixée en un point 3 qui est décentré par rapport au centre 0 de la jante 2 ou bande de roulement 1.

De préférence, la bande de roulement est en élastomère et la jante creuse 2 est en matériau plus résistant tel que polyamide ou acier.

Le fait que le point 3 soit décalé par rapport au centre 0 de l'ensemble jante + bande de roulement permet à ce dernier d'osciller autour du point 3, comme indiqué par la flèche f par déformation du silent bloc, et permet la rotation de l'ensemble autour du point 3.

Cette bande de roulement peut, en plus, se déformer en cas de choc important, contre une descente de trottoir par exemple.

Les figures 2 et 3 illustrent la mise en oeuvre de ce principe.

Selon un premier mode de réalisation, le point 3 est constitué par un silent bloc cylindrique 5 fixé au châssis 4 de la valise non représentée.

On ajoute ainsi à la déformation élastique de la jante 2 un élément élastique supplémentaire qui est le silent bloc 5.

La roulette ainsi constituée comporte ainsi trois moyens élastiques : le pneu 1, la jante élastiquement déformable 2 et la suspension élastique 5.

La figure 3 représente une variante de réalisation du dispositif de la figure 2, selon lequel un bras oscillant 6 est interposé entre le silent bloc 5 et le châssis 4, ce bras étant lui-même monté sur le châssis 4 au moyen d'un silent bloc 7.

On ajoute ainsi aux trois moyens élastiques du dispositif de la figure 2, un moyen supplémentaire d'amortissement qui est le bras oscillant 6 rappelé élastiquement.

Les figures 4 à 6 représentent un deuxième mode de réalisation de l'invention, les mêmes éléments portant les mêmes références.

Dans ce mode de réalisation la bande de roulement est solidaire de la jante creuse, déformable 2 et c'est tout l'ensemble jante + bande de roulement qui tourne autour du point 0, tout en étant porté de façon décentrée par rapport à ce point 0.

Le support de l'ensemble rotatif 1,2 est constitué par trois rouleaux 10, 11 et 12 porté à pivotement par un support 9, qui est fixé au bras 4a du châssis 4 par un silent bloc 8 ; de sorte que ledit support 9 peut osciller élastiquement.

Les deux rouleaux 10 et 11 prennent appui sur le pneu 1, à l'extérieur de l'ensemble pneu-jante (1, 2) ; tandis que le rouleau 12 prend appui à l'intérieur dudit ensemble, contre la paroi interne de la jante 2.

Les centres des rouleaux 10 et 11 forment avec le point 0 un triangle isocèle et le centre du rouleau 12 est sur la bissectrice de l'angle au somment dudit triangle.

Avec cette variante, on retrouve les quatre moyens élastiques de la figure 3 à savoir : la fixation élastique du support 9 au châssis 4, la suspension élastique de l'ensemble de roulement, la fixation décentrée dudit ensemble et le pneu 1, la déformation élastique de la jante.

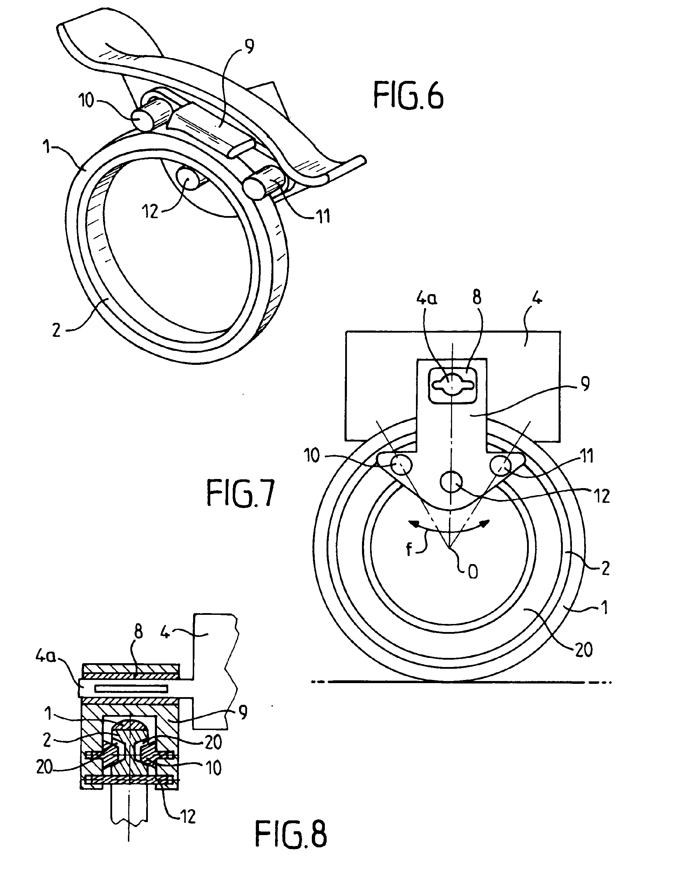

Les figures 7 et 8 illustrent une variante de réalisation du dispositif selon les figures 4 à 6.

Comme dans l'exemple précédent, le pneu 1 est solidaire de la jante 2 ; cette jante 2 est creuse et est élastiquement déformable ; cette jante est portée par un support 9, monté à pivotement sur le bras 4a du châssis 4 par un silent bloc 8, au moyen de rouleaux 10, 11 et 12, ces rouleaux étant disposés comme aux figures 4 à 6, ce qui change est la disposition desdits rouleaux 10, 11 et 12 par rapport à la jante.

La jante 2 comporte deux gorges circulaires 20 ménagées de chaque côté de la jante, ces gorges ayant une section trapézoïdale. Les rouleaux 10 et 11 sont doubles, disposés de chaque côté de la jante et sont tronconiques de façon à pénétrer dans les deux gorges 20. Il y a donc quatre rouleaux tronconiques (deux rouleaux 10 et deux rouleaux 11) pénétrant par paire dans chaque gorge 20.

Le rouleau 12 traverse le creux de la jante et vient en appui contre sa paroi circulaire intérieure.

Le fonctionnement est identique à celui du dispositif des figures 4 à 6, mais le risque de déjantage est supprimé.

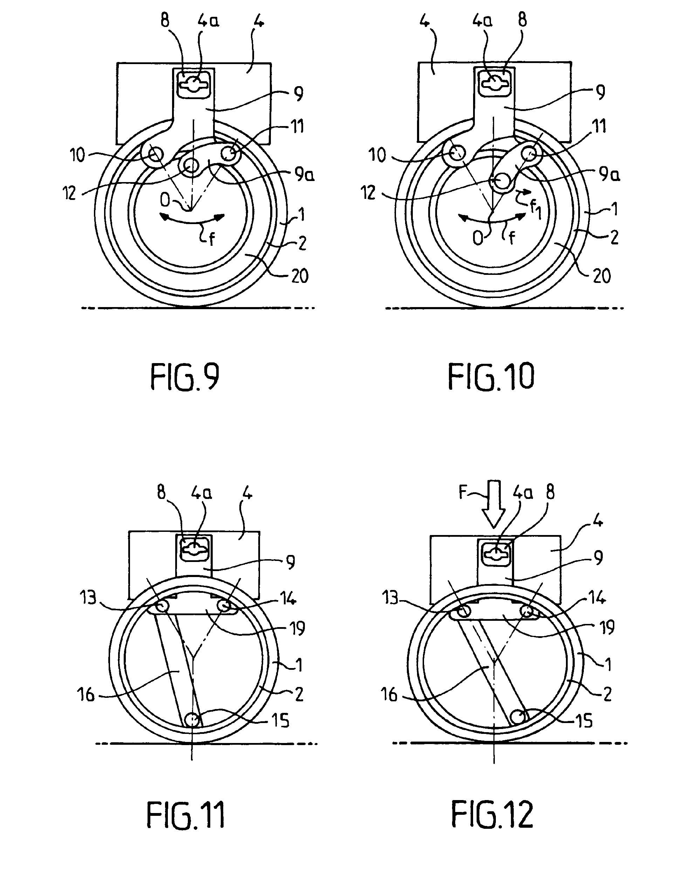

Les figures 9 et 10 représentent une variante de réalisation du dispositif des figures 7 et 8.

La modification consiste en ce que le rouleau 12, qui est en contact avec l'intérieur de la jante 2, est porté par un bras 9a, monté à pivotement sur le support 9 et qui peut pivoter lorsque la jante est élastiquement déformée, ce qui permet audit rouleau 12 de suivre les déformations de la jante 2. L'articulation du bras 9a comporte un rappel élastique pour maintenir le rouleau 12 en contact avec la jante.

Les figures 11 et 12 illustrent une autre variante dans laquelle les mêmes éléments portent les mêmes références.

Dans cet exemple l'ensemble jante creuse 2 + pneu 1 sont portés par trois rouleaux 13, 14 et 15 placés à l'intérieur de la jante 2. Les rouleaux 13 et 14 sont les rouleaux porteurs, le troisième rouleau 15 faisant office de tendeur maintenant les rouleaux 13 et 14 au contact avec la paroi interne de la jante 2.

Le support 9, relié au châssis 4 comme dans les exemples précédents, est en forme de T inversé, la branche horizontale (9a) du T portant à ses extrémités les rouleaux 13 et 14. Le troisième rouleau 15 est porté par un bras 16 articulé avec rappel élastique sur la branche 9a, à l'endroit où est placé le rouleau 13.

La figure 11 représente la roulette en position normale ; la figure 11 le représente déformée par la force F.

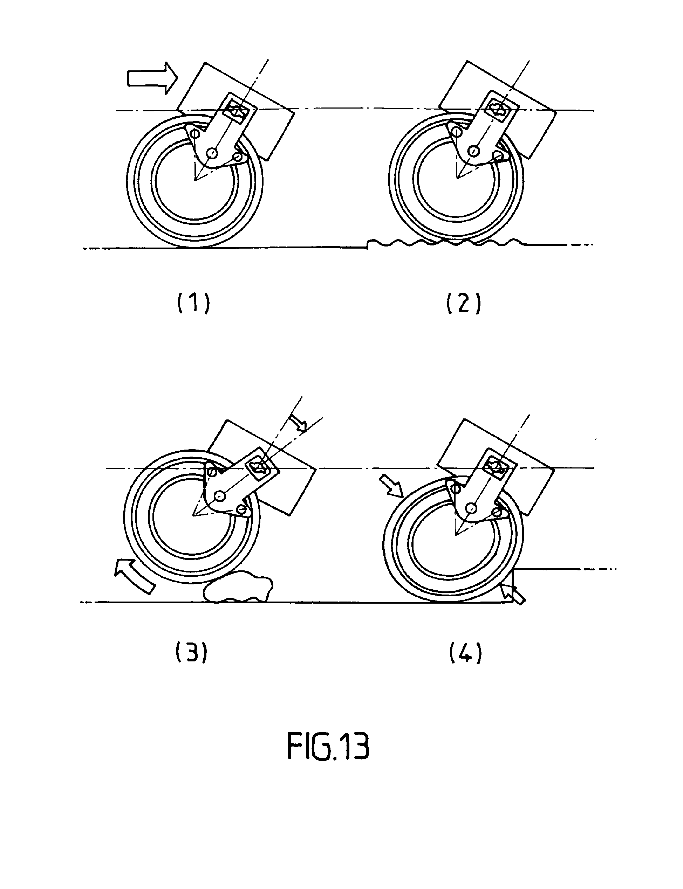

La figure 13 illustre le fonctionnement de la roue selon l'invention.

Pour les hautes fréquences, le pneu 1, en matériau tendu, permet d'absorber les irrégularités de la surface de roulage. Les rouleaux 10, 11 et 12 sont recouverts d'un matériau élastomère pour absorber une partie de la bande des très hautes fréquences et pour rattraper les jeux lors du montage.

Le support 9 est, de préférence, en deux parties symétriques pour enserrer l'ensemble jante/pneu, et les deux parties sont séparées par une fine paroi de matériau élastomère, contribuant à l'absorption d'une partie des hautes fréquences.

En ce qui concerne les moyennes fréquences, le silent bloc 8 permet le débattement de l'ensemble roue + châssis (flèche f) lors de chocs par compression de l'élastomère. Le silent bloc 8 permet également d'absorber les chocs latéraux.

En ce qui concerne les basses fréquences, c'est à dire les chocs, la jante creuse déformable 2 se déforme sous l'effet de contraintes moyennes, afin d'absorber les basses fréquences c'est-à-dire les chocs.

La figure 13-1 représente la roulette selon l'invention en roulage normal.

La figure 13-2 illustre le fonctionnement en cas de roulage sur surface irrégulière avec absorption des hautes fréquences à faibles amplitudes.

La figure 13-3 illustre le fonctionnement en cas d'obstacle de faibles dimensions (cailloux) avec absorption des moyennes fréquences à moyennes amplitudes.

La figure 13-4 illustre le fonctionnement en cas d'obstacle important, tel qu'un trottoir ou une marche d'escalier avec absorption des basses fréquences à fortes amplitudes.

## Revendications

1. Roue pouvant absorber les vibrations de hautes fréquences et faibles amplitudes ainsi que celles de basses fréquences et fortes amplitudes ou de moyennes fréquences et moyennes amplitudes **caractérisée par le fait qu'**elle comporte une bande de roulement (1) en matériau tendre portée par une jante (2) creuse, l'ensemble bande de roulement (1)-jante (2) étant relié à son support en un point décentré par rapport au centre de rotation (0) dudit ensemble (1-2).

2. Roue selon la revendication 1, comportant une bande de roulement (1) en matériau tendre portée par une jante (2) creuse, l'ensemble bande de roulement (1)-jante (2) étant relié à son support (9) en un point décentré par rapport au centre (0) de rotation dudit ensemble (1-2), **caractérisé par le fait que** cet ensemble bande de roulement-jante (1-2) est porté par l'intermédiaire de trois rouleaux (10,11,12).

3. Roue selon la revendication 2, **caractérisée par le fait que** deux rouleaux (10,11) prennent appui sur la bande de roulement (1), à l'extérieur de l'ensemble bande de roulement-jante (1-2) et **par le fait que** le troisième rouleau (12) prend appui à l'intérieur dudit ensemble (1-2) sur la paroi interne de la jante (1).

4. Roue selon la revendication 1 ou 2, **caractérisée par le fait que** l'ensemble bande de roulement-jante (1-2) est relié à un support (9) monté à pivotement sur un bras (4a).

5. Roue selon la revendication 4, **caractérisée par le fait que** ledit support (9) est monté sur le bras (4a) par l'intermédiaire d'un silent bloc (8).

6. Roue selon la revendication 3, dans laquelle les centres des deux rouleaux (10,11) forment avec le centre de rotation 0 un triangle isocèle, le centre du troisième rouleau (12) étant sur la bissectrice de l'angle au sommet dudit triangle.

7. Roue selon l'une quelconque des revendications 2, 3 ou 6, dans laquelle la jante (2) comporte de chaque côté, une gorge circulaire (20), ces gorges (20) ayant une section trapézoïdale; deux rouleaux (10, 11) étant doubles, disposés de chaque côté de la jante et tronconiques de façon à pénétrer dans les deux gorges (20); et le troisième rouleau (12) traversant la jante creuse (2) et venant en appui contre sa paroi circulaire intérieure.

8. Roue selon la revendication 7, dans laquelle le troisième rouleau (12) est porté par un bras (9a), monté à pivotement sur le support (9) de façon à pouvoir suivre les déformations élastiques de la jante (2); l'articulation du bras (9a) comportant un rappel élastique.

9. Roue selon la revendication 1 ou 2, dans laquelle la bande de roulement ou pneu (1) est solidaire de la jante creuse, cet ensemble pneu-jante (1-2) étant porté par un support (9) de façon à être décentré par l'intermédiaire de trois rouleaux (13, 14, 15) placés à l'intérieur de la jante creuse (2).

10. Roue selon la revendication 9, dans laquelle le support (9) est en forme de T inversé, la bande horizontale (9a) du T portant, à ses extrémités, deux rouleaux supérieurs (13, 14), le troisième rouleau (15) étant porté par un bras (16) articulé avec rappel élastique sur la branche (9a).

11. Roue selon la revendication 10, dans laquelle le support (9) est monté à pivotement sur le châssis (4) par l'intermédiaire d'un silent bloc (8).

12. Roue selon la revendication 1, dans laquelle la bande de roulement (1) est portée par la bague extérieure d'un roulement à bille, dont la bague intérieure constitue la jante creuse (2).

13. Roue selon la revendication 12, dans laquelle la bande de roulement (1) tourne par glissement sur la jante creuse (2).
